# EUROPEAN PATENT APPLICATION

(11) **EP 4 006 188 A1**
(43) Date of publication of application: **01.06.2022**
(21) Application number: 20920766.1
(22) Date of filing: 04.09.2020
(51) Int. Cl.: C22C 19/07, B22F 3/105, B22F 3/16, B33Y 70/00

(54) **COBALT-BASED ALLOY PRODUCT AND METHOD FOR PRODUCING SAME**

(71) Applicant: Mitsubishi Heavy Industries, Ltd., 100-8332 Tokyo (JP)
(72) Inventor: WANG, Yuting, Yokohama-shi, Kanagawa 220-8401 (JP); IMANO, Shinya, Yokohama-shi, Kanagawa 220-8401 (JP)
(74) Representative: Strehl Schübel-Hopf & Partner
(86) International application number: PCT/JP2020/033547
(87) International publication number: WO 2022/049717

(57) **Abstract**

There is provided a cobalt-based alloy product comprising: Co, C, N, B, Cr, Fe, Ni, W, Mo, Al, Si, and/or Mn with predetermined contents, and 0.5-4 mass% of an M component. The M component is a transition metal other than W and Mo and having an atomic radius of more than 130 pm. The product is a polycrystalline body of matrix phase crystal grains in which segregation cells are formed. There are at least two kinds of regions of the segregation cells wherein: a first region has an average size of 0.13-1.3 µm; a second region has an average size of 0.25-2 µm; and the average size of the second region is 1.3 times or more larger than that of the first region.

## Description

### TECHNICAL FIELD OF THE INVENTION

The present invention relates to techniques for cobalt based alloy materials having excellent mechanical properties and, in particular, to a cobalt based alloy product formed by additive manufacturing and a method for manufacturing the same.

### DESCRIPTION OF BACKGROUND ART

Cobalt (Co) based alloy materials, along with nickel (Ni) based alloy ones, are representative heat resistant alloy materials. Also referred to as superalloys, they are widely used for high temperature members (components used under high temperature environment, e.g. gas turbine members, steam turbine members, etc.). Although Co based alloy materials are higher in material costs than Ni based alloy ones, they have been used for applications such as turbine stator blades and combustor members because of their excellence in corrosion resistance and abrasion resistance, and their ease of solid solution strengthening.

In Ni based alloy materials, various improvements that have been made so far in composition and manufacturing processes of heat resistant alloy materials have led to the development of strengthening through γ' phase (e.g. Ni₃(Al, Ti) phase) precipitation, which has now become mainstream. On the other hand, in Co based alloy materials, an intermetallic compound phase that contributes to improving mechanical properties, like the γ' phase in Ni based alloy ones, hardly precipitates. Thereby, it has been said that the Co based alloy materials exhibit lower mechanical strength than the γ' phase precipitation-strengthened Ni based alloy materials.

In other words, if the mechanical properties of the Co based alloy material can be achieved equivalent to those of the γ' phase precipitation-strengthened Ni-based alloy material, the Co-based alloy material having excellent corrosion resistance and wear resistance will become a material suitable for high-temperature members equal to or higher than the Ni-based alloy material.

The present inventors carried out diligent research aiming for improvement of the mechanical strength of the Co based alloy material. As a result, the inventors succeeded in developing a Co based alloy product having the mechanical properties equal to or better than those of the γ ' phase precipitation-strengthened Ni-based alloy product by utilizing an additive manufacturing (AM) method with a Co based alloy material having a predetermined chemical composition, as disclosed in Patent Literature 1 (JP 6509290 B2).

Patent Literature 1 discloses a product formed of a cobalt based alloy. The cobalt based alloy has a chemical composition comprising: 0.08 to 0.25 mass % of carbon (C); 0.1 mass % or less of boron (B); 10 to 30 mass % of chromium (Cr); 5 mass % or less of iron (Fe), 30 mass % or less of nickel (Ni), the total amount of the Fe and the Ni being 30 mass % or less; tungsten (W) and/or molybdenum (Mo), the total amount of the W and the Mo being 5 to 12 mass %; titanium (Ti), zirconium (Zr), niobium (Nb) and tantalum (Ta), the total amount of the Ti, the Zr, the Nb and the Ta being 0.5 to 2 mass %; 0.5 mass % or less of silicon (Si); 0.5 mass % or less of manganese (Mn); 0.003 to 0.04 mass % of nitrogen (N); and the balance being Co and impurities. The product is a polycrystalline body comprising crystal grains with an average crystal grain size of 20 to 145 µm, and in the crystal grains of the polycrystalline body, grains of an MC type carbide phase comprising the Ti, the Zr, the Nb and/or the Ta are precipitated at an average intergrain distance of 0.15 to 1.5 µm.

### CITATION LIST

### PATENT LITERATURE

Patent Literature 1: JP 6509290 B2.

### SUMMARY OF THE INVENTION

### PROBLEMS TO BE SOLVED BY THE INVENTION

The inventors further studied the manufacturing of high-temperature members for use in an actual machine, based on the technique of Patent Literature 1. In that study, there was noticed the desired properties may differ depending on a part/portion of a high temperature member even within one member.

For example, in the case of a turbine rotor blade, the creep property to withstand the rotational centrifugal stress at a high temperature is a very important mechanical property on the airfoil part thereof that is directly exposed to the high temperature fluid. From this point of view, precision cast articles (unidirectional solidification articles and single crystal solidification articles), which are advantageous for improving the creep strength, have often been adopted in conventional turbine blades.

On the other hand, on the shank that is a base portion of the airfoil part and the root part that is fitted to the rotor disc, the high temperature fatigue property to withstand repeated bending stress and torsional stress from the airfoil part becomes more important mechanical property. It is noted that "more important" hereof is a relative comparison, and the creep strength may not be ignored on the shank and the root part.

In conventional turbine rotor blades, it is difficult to adjust the mechanical characteristics according to different portions of the member and has prioritized achievement of the required creep properties due to manufacturing restrictions (e.g., manufacturing by a precision casting method using an alloy material having a chemical composition suitable for precision casting). However, for the purpose of adjusting the mechanical characteristics depending on different portions of the member, for example, the airfoil part and the shank are never welded together.

In other words, if the mechanical characteristics can be adjusted according to different portions in one member, the member having more desirable characteristics can be obtained as a whole, and the performance and the durability of the member can be expected to be improved. This would lead to improvement in efficiency and reliability of machines/devices using the member.

The present invention was made in view of the foregoing. An object of the present invention is to provide a Co based alloy product which has the mechanical properties comparable to or superior to those of the precipitation-strengthened Ni based alloy materials and is adjusted the mechanical characteristics according to different portions in one product, and a method for manufacturing the same.

### SOLUTION TO PROBLEMS

(I) According to one aspect of the present invention, there is provided a product formed of a cobalt based alloy material. The cobalt based alloy product has a chemical composition including: 0.08 to 0.25 mass % of C; 0.003 to 0.2 mass % of N, the total amount of the C and the N being 0.083 to 0.28 mass %; 0.1 mass % or less of B; 10 to 30 mass % of Cr; 5 mass % or less of Fe and 30 mass % or less of Ni, the total amount of the Fe and the Ni being 30 mass % or less; W and/or Mo, the total amount of the W and the Mo being 5 to 12 mass %; 3 mass % or less of Al; 0.5 mass % or less of Si; 0.5 mass % or less of Mn; 0.5 to 4 mass % of an M component being a transition metal other than W and Mo and having an atomic radius of more than 130 pm; and the balance being Co and impurities. The impurities include 0.04 mass % or less of O. The product is a polycrystalline body of matrix phase crystal grains. In the matrix phase crystal grains, segregation cells are formed in that the M component is segregated in boundary regions of the segregation cells. There are at least two kinds of regions of the segregation cells having different average sizes from each other. A first segregation cell region has an average size of 0.13 to 1.3 µm. A second segregation cell region has an average size of 0.25 to 2 µm. And the average size of the second segregation cell region is 1.3 times or more larger than that of the first segregation cell region. Or, in the matrix phase crystal grains, post-segregation cells are formed in that particles of MC type carbide phase, M(C,N) type carbonitride phase and/or MN type nitride phase including the M component are dispersedly precipitated along boundary regions of the post-segregation cells. There are at least two kinds of regions of the post-segregation cells having different average sizes from each other. A first post-segregation cell region has an average size of 0.13 to 1.3 µm. A second post-segregation cell region has an average size of 0.25 to 2 µm. And the average size of the second post-segregation cell region is 1.3 times or more larger than that of the first post-segregation cell region.

Meanwhile, in the present invention, each size of segregation cells/post-segregation cells is basically defined as the average of the long diameter and the short diameter in the microstructure observation. However, when an aspect ratio of the longer diameter and the short diameter is three or more, twice the short diameter may be adopted as the size of segregation cell/post-segregation cell. Furthermore, in the invention the average size of segregation cell/post-segregation cell is defined as an average size of adjacent at least 100 segregation cells/post-segregation cells in the microstructure observation. Furthermore, in the above-described MC, M(C,N) and MN types, "M" means a transition metal, "C" means carbon and "N" means nitrogen.

In the above Co based alloy product (I) of the invention, the following changes and modifications can be made.
(i) The M component of the chemical composition may be at least one of Ti, Zr, hafnium (Hf), vanadium (V), Nb and Ta.
(ii) In the case that the chemical composition includes the Ti as the M component, content of the Ti may be 0.01 to 1 mass %; in the case that the chemical composition includes the Zr as the M component, content of the Zr may be 0.05 to 1.5 mass %; in the case that the chemical composition includes the Hf as the M component, content of the Hf may be 0.01 to 0.5 mass %, in the case that the chemical composition includes the V as the M component, content of the V may be 0.01 to 0.5 mass %; in the case that the chemical composition includes the Nb as the M component, content of the Nb may be 0.02 to 1 mass %; and in the case that the chemical composition includes the Ta as the M component, content of the Ta may be 0.05 to 1.5 mass %.
(iii) The Zr may be an essential component as the M component of the chemical composition.
(iv) The M component of the chemical composition may be three or more of the Ti, the Zr, the Hf, the V, the Nb and the Ta.
(v) The product may include two regions, one region exhibits a creep rupture time of 1000 hours or more by a creep test under conditions of a temperature of 850°C and a stress of 156 MPa, and the other region exhibits a rupture cycle number of 1000 cycles or more by a high temperature fatigue test under conditions of a temperature 800°C and a strain of 1%.
(vi) Between the first and the second segregation cell regions, there may further exist a third segregation cell region having an average size between the average size of the first segregation cell region and that of the second segregation cell region, or
   between the first and the second post-segregation cell regions, there may further exist a third post-segregation cell region having an average size between the average size of the first post-segregation cell region and that of the second post-segregation cell region.
(vii) The product may be a high temperature member.
(viii) The high temperature member may be a turbine stator blade, a turbine rotor blade, a turbine combustor nozzle, or a heat exchanger.

(II) According to another aspect of the invention, there is provided a method for manufacturing the above-described cobalt based alloy product. The method includes: an alloy powder preparation step of preparing a cobalt based alloy powder having the chemical composition; and a selective laser melting step of forming an additively manufactured article, the step comprising alternate repetition of an alloy powder bed preparation substep of laying the cobalt based alloy powder such that it forms an alloy powder bed having a predetermined thickness and a laser melting solidification substep of irradiating a predetermined region of the alloy powder bed with a laser beam to locally melt and rapidly solidify the cobalt based alloy powder in the region. In the selective laser melting step, the predetermined thickness of the alloy powder bed h (unit: µm), an output power of the laser beam P (unit: W), and a scanning speed of the laser beam S (unit: mm/s) are controlled to satisfy the following formulas: "15 < h < 150" and "67 × (P/S) - 3.5 < h < 2222 × (P/S) + 13", and to satisfy the following relationship in that an average size of molten pools in additive manufacturing the second segregation cell region is larger than that in additive manufacturing the first segregation cell region.

In the above method for manufacturing the Co based alloy product (II) of the invention, the following changes and modifications can be made.

(ix) After the selective laser melting step, the method may further include a strain relaxation annealing step of subjecting the additively manufactured article to an annealing at temperatures in a range of 600°C or more and less than 1100°C.

### ADVANTAGES OF THE INVENTION

According to the invention, there can be provided a Co based alloy product which has the mechanical properties comparable to or superior to those of the precipitation-strengthened Ni based alloy materials and is adjusted the mechanical characteristics according to different portions in one product, and a method for manufacturing the same.

### BRIEF DESCRIPTION OF THE DRAWINGS

FIG. 1 is a flow diagram showing an exemplary process of a method for manufacturing a Co based alloy product according to an embodiment of the present invention;
FIG. 2 is a schematic illustration of a perspective view showing an exemplary turbine rotor blade as a high temperature member according to an embodiment of the invention;
FIG. 3 is a schematic illustration of a perspective view showing an exemplary turbine stator blade which is a Co based alloy product as another high temperature member according to an embodiment of the invention;
FIG. 4 is a schematic illustration of a cross-sectional view showing an exemplary gas turbine equipped with a Co based alloy product according to an embodiment of the invention;
FIG. 5 is a schematic illustration of a perspective view showing an exemplary heat exchanger which is another Co based alloy product as a high temperature member according to an embodiment of the invention;
FIGs. 6(a) and 6(b) are optical microscopy images showing exemplary microstructures of cross sectional view parallel to the additive manufacturing direction in the alloy product AA-1 made from the alloy powder AP-1; (a) first segregation cell region additively manufactured under conditions of the alloy powder bed height h of 30 µm and the laser beam output power P of 120 W, and (b) second segregation cell region additively manufactured under conditions of the alloy powder bed height h of 50 µm and the laser beam output power P of 190 W;
FIGs. 7(a) and 7(b) are exemplary scanning electron microscopy (SEM) images of FIGs. 6(a) and 6(b) respectively; (a) first segregation cell region additively manufactured under conditions of the alloy powder bed height h of 30 µm and the laser beam output power P of 120 W, and (b) second segregation cell region additively manufactured under conditions of the alloy powder bed height h of 50 µm and the laser beam output power P of 190 W;
FIG. 8 is an SEM image showing an exemplary microstructure of the alloy product subjected to a strain relaxation annealing; and
FIG. 9 is a graph showing a relationship between holding time and mass change ratio in an oxidation test to Co based alloy products AA-2 and AA-3.

### DETAILED DESCRIPTION OF THE PREFERRED EMBODIMENTS

### [Basic Concept of the Invention]

Based on the technique of Patent Literature 1, the inventors have studied in more detail in relationships among the alloy compositions, the additive manufacturing conditions, the microstructures and the mechanical characteristics.

Through that research, when the situation of additive manufacturing (e.g., the size of molten pool) is changed, it has been found that the microstructure of the additively manufactured article (AM article) changes and then unexpected mechanical properties are exhibited. In particular, it has been found that the high temperature fatigue property is greatly improved as the average size of the segregated cells increases. It can be said that the results of the invention are extremely peculiar.

In addition, in the alloy composition, it has been found that Hf and V are also suitable as the transition metal M capable of easily segregating in the boundary region of the segregation cell and forming an MC type carbide phase. Moreover, it has been found that the alloy composition containing a high Al content and a high N content, which was considered to be unfavorable at the time of study of Patent Literature 1, further improves the oxidation resistance properties of the Co based alloy material. The present invention has been made based on these findings.

Preferred embodiments of the invention will be hereinafter described along a manufacturing procedure with reference to the accompanying drawings.

### [Method for Manufacturing Co Based Alloy Product]

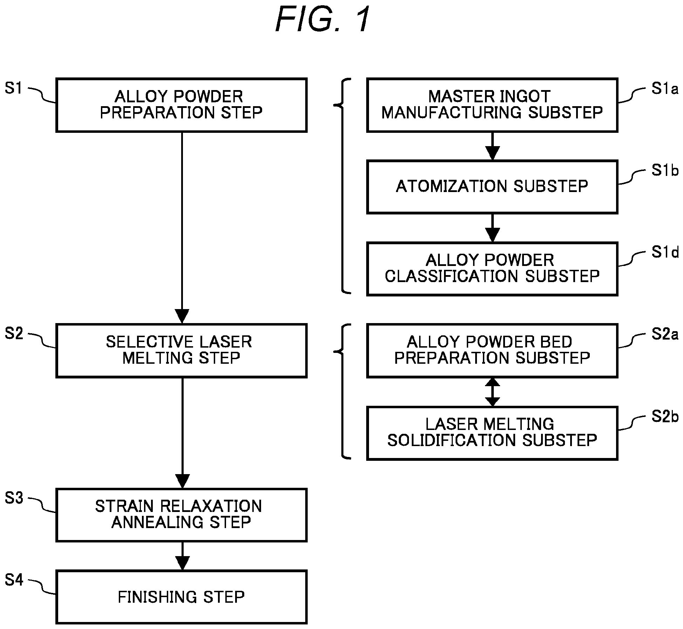

FIG. 1 is a flow diagram showing an exemplary process of a method for manufacturing a Co based alloy product according to an embodiment of the invention. As shown in FIG. 1, the method for manufacturing a Co based alloy product roughly includes: an alloy powder preparation step S1 of preparing a Co based alloy powder; and a selective laser melting step S2 of forming the prepared Co based alloy powder into an AM article with a desired shape. The AM article obtained by the step S2 is one aspect of a Co based alloy product according to the invention.

As a result of detailed studies by the inventors, it has been found that the average size of the segregation cells of the AM article changes when the average size of the molten pools during additive manufacturing in the step S2 is changed. As a method for controlling the average size of the molten pools, for example, there is a method of combining the control of the alloy powder bed thickness and the control of the amount of local heat input (the output power of the laser beam / the scanning speed of the laser beam).

As necessary, the AM article obtained by the step S2 may be further subjected to a strain relaxation annealing step S3 of relaxing a residual internal strain of the AM article. Also, a finishing step S4 such as forming a thermal barrier coating (TBC) on the AM article and/or finishing a surface of the AM article may be further conducted. These steps S3 and S4 are not essential, but they are preferable to be performed based on considerations of a shape and a usage environment of the Co based alloy product. The AM article obtained through the step S3 and/or the step S4 is another aspect of a Co based alloy product according to the invention.

Although the manufacturing procedure shown in FIG. 1 is roughly similar to that of Patent Literature 1, there is a difference between Patent Literature 1 and the invention in being usable of an as-built AM article obtained by the selective laser melting step S2 as a Co based alloy product (in other words, not conducting a solution heat treatment and an aging heat treatment described in Patent Literature 1). In addition, there is another difference between Patent Literature 1 and the invention in controlling the additive manufacturing conditions so as to change the average size of the molten pools during additive manufacturing one AM article. Furthermore, in the case that controlling the nitrogen content in Co based alloy higher, there is still another difference between Patent Literature 1 and the invention in controlling the amount (existence ratio) of nitrogen atoms in the atmosphere during the alloy powder preparation step.

Each step will be hereinafter described in more detail.

### (Alloy Powder Preparation Step)

In the step S1, a Co based alloy powder having a predetermined chemical composition is prepared. The chemical composition preferably includes: 0.08 to 0.25 mass % of C, 0.003 to 0.2 mass % of N, the total amount of the C and the N being 0.083 to 0.28 mass %; 0.1 mass % or less of B; 10 to 30 mass % of Cr; 5 mass % or less of Fe and 30 mass % or less of Ni, the total amount of the Fe and the Ni being 30 mass % or less; W and/or Mo, the total amount of the W and the Mo being 5 to 12 mass %; 3 mass % or less of Al; 0.5 mass % or less of Si; 0.5 mass % or less of Mn; 0.5 to 4 mass % of an M component being a transition metal other than W and Mo and having an atomic radius of more than 130 pm; and the balance being Co and impurities. As impurities, 0.04 mass % or less of O may be included.

### C: 0.08 mass % or more and 0.25 mass % or less

The C component is an important component that constitutes an MC type carbide phase (transition metal carbide phase of at least one of Ti, Zr, Hf, V, Nb and Ta) and/or an M(C,N) type carbonitride phase (transition metal carbonitride phase of at least one of Ti, Zr, V, Nb and Ta) to serve as a precipitation strengthening phase. The content of the C component is preferably 0.08 to 0.25 mass %, more preferably 0.1 to 0.2 mass %, and even more preferably 0.12 to 0.18 mass %. When the C content is less than 0.08 mass %, the amount of precipitation of the precipitation strengthening phase (MC type carbide phase and/or M(C,N) type carbonitride phase) is insufficient, resulting in an insufficient effect of improving the mechanical properties. By contrast, when the C content is over 0.25 mass %, carbide phases other than the MC type carbide phase precipitate excessively, and/or the alloy material becomes excessively hard, which leads to deteriorated toughness.

### N: 0.003 mass % or more and 0.2 mass % or less

The N component is an important component that constitutes the M(C,N) type carbonitride phase and/or an MN type nitride phase (transition metal nitride phase of at least one of Ti, Zr, V, Nb and Ta), and also contributes to stabilization of the precipitation strengthening phases. The content of the N component is preferably 0.003 to 0.2 mass %, more preferably more than 0.04 mass % and 0.19 mass % or less, and even more preferably 0.13 to 0.18 mass %. When the N content is less than 0.003 mass %, the advantageous effects due to the N component are insufficient. When the N content is 0.04 mass % or less, while the advantageous effects of precipitation of the M(C,N) type carbonitride phase and/or the MN type nitride phase are insufficient, there is no particular problem. In contrast, when the N content is over 0.2 mass %, the mechanical properties of the final product would deteriorate.

Mechanism of improving the mechanical properties of Co based alloy materials at a higher N content than before has not been clarified at the present. However, by coexisting the C and N components in pointful amounts, it would be possible that the MC type carbide phase, the M(C,N) type carbonitride phase and/or the MN type nitride phase are formed well-balanced and stably, and contribute to dispersed precipitation. The total amount of the C and the N is preferably 0.083 to 0.28 mass %, more preferably more than 0.12 mass % and 0.27 mass % or less, even more preferably 0.16 to 0.25 mass %.

### B: 0.1 mass % or less

The B component contributes to improving bondability between crystal grain boundaries (so-called grain boundary strengthening). Although the B is not an essential component, when it is contained in the alloy, the content of the B component is preferably 0.1 mass % or less and more preferably 0.005 to 0.05 mass %. When the B component is over 0.1 mass%, cracking (e.g. solidification cracking) is prone to occur during formation of the AM article.

### Cr: 10 mass % or more and 30 mass % or less

The Cr component contributes to improving corrosion resistance and oxidation resistance. The content of the Cr component is preferably 10 to 30 mass % and more preferably 15 to 27 mass %. In the case where a corrosion resistant coating layer is provided on the outermost surface of the Co based alloy product, the content of the Cr component is even more preferably 10 to 18 mass %. When the Cr content is less than 10 mass %, advantageous effects such as improvements of the corrosion resistance and the oxidation resistance are insufficient. When the Cr content is over 30 mass %, the brittle σ phase and/or the excessive amount of Cr carbide phase are generated, resulting in deteriorated mechanical properties (i.e. toughness, ductility, strength, etc.). Meanwhile, in the invention Cr carbide phase generation itself in the article is not denied.

### Ni: 30 mass % or less

Being similar to Co component in characteristics but less expensive than Co, the Ni component may be used to replace part of the Co component. Although the Ni is not an essential component, when it is contained in the alloy, the content of the Ni component is preferably 30 mass % or less, more preferably 20 mass % or less, and even more preferably 5 to 15 mass %. When the Ni content is over 30 mass %, the abrasion resistance and the local stress resistance, which are characteristics of Co based alloys, deteriorate. This would be attributable to the difference in stacking fault energy between Co and Ni.

### Fe: 5 mass % or less

Being much less expensive than Ni and similar to Ni component in characteristics, the Fe component may be used to replace part of the Ni component. The total content of the Fe and Ni is preferably 30 mass % or less, more preferably 20 mass % or less, and even more preferably 5 to 15 mass %. Although the Fe is not an essential component, when it is contained in the alloy, the content of the Fe component is preferably 5 mass % or less and more preferably 3 mass % or less in the range less than the Ni content. When the Fe content is over 5 mass %, the corrosion resistance and mechanical properties deteriorate.

### W and/or Mo: 5 mass % or more and 12 mass % or less in total

The W component and the Mo component contribute to solution-strengthening the matrix. The total content of the W component and/or the Mo component (at least one of W and Mo components) is preferably 5 to 12 mass % and more preferably 7 to 10 mass %. When the total content of the W component and the Mo component is less than 5 mass %, the solution strengthening of the matrix is insufficient. In contrast, when the total content of the W component and the Mo component is over 12 mass %, the brittle σ phase tends to be generated easily, resulting in deteriorated mechanical properties (i.e. toughness, ductility, etc.).

### Re: 2 mass % or less

The Re component contributes to solution-strengthening the matrix and improving corrosion resistance. Although the Re is not an essential component, when it is contained in the alloy to replace part of the W component or the Mo component, the content of the Re component is preferably 2 mass % or less and more preferably 0.5 to 1.5 mass %. When the Re content is over 2 mass %, the advantageous effects of the Re component become saturated, and the material costs become too high.

### Al: 3 mass % or less

The Al component was considered as one of the impurities of the alloy and was not to be intentionally included in the alloy, in the conventional arts. By contrast, in the invention unexpected effects have been revealed such that intentional addition of the Al component with higher content than before leads equal to or higher mechanical properties as well as much larger improvement in the oxidation resistance than the conventional arts.

The Al is not an essential component. However, in the case that the Al component is contained, the content of the Al component is preferably 3 mass % or less, more preferably 2 mass % or less, and even more preferably more than 0.5 mass % and 1.5 mass % or less. When the Al content is less than 0.5 mass %, while the advantageous effects due to the Al component are insufficient, there is no particular problem. In contrast, when the Al content is over 3 mass %, the mechanical properties of the final product would deteriorate.

Mechanism of improving the oxidation resistance of Co based alloy materials at a higher Al content than before has not been clarified at the present. However, from the various experiments by the inventors it has been confirmed that existence of the Al component suppresses peeling/detachment of an oxide film generated by thermal oxidation. In other words, the presence of the Al component would improve adherence/fixation of the oxide film.

### Si: 0.5 mass % or less

The Si component serves as a deoxidant agent and contributes to improving the mechanical properties. Although the Si is not an essential component, when it is contained in the alloy, the content of the Si component is preferably 0.5 mass % or less and more preferably 0.01 to 0.3 mass %. When the Si content is over 0.5 mass %, coarse grains of an oxide (e.g. SiO₂) are generated, which causes deterioration of the mechanical properties.

### Mn: 0.5 mass % or less

The Mn component serves as a deoxidant agent and a desulfurizing agent and contributes to improving the mechanical properties and the corrosion resistance. The Mn is not included in after-mentioned M component since the Mn has the atomic radius of 127 pm. Although the Mn is not an essential component, when it is contained in the alloy, the content of the Mn component is preferably 0.5 mass % or less and more preferably 0.01 to 0.3 mass %. When the Mn content is over 0.5 mass %, coarse grains of a sulfide (e.g. MnS) are generated, which causes deterioration of the mechanical properties and the corrosion resistance.

M component of transition metal other than W and Mo and with atomic radius of more than 130 pm: 0.5 to 4 mass % in total

As an M component being a transition metal other than W and Mo, having an atomic radius of more than 130 pm, and being capable to forming an MC type carbide phase of a simple cubic crystal system, there can be listed Ti, Zr, Hf, V, Nb and Ta components. These MC type carbide phases could become a precipitation strengthening (reinforcing) phase for the product of the invention. In addition, there can be listed Ti, Zr, V, Nb and Ta components as a component being capable to forming an MN type nitride phase. These MN type nitride phases could also become the precipitation strengthening phase. Moreover, the Ti, Zr, V, Nb and Ta components could form an M(C,N) type carbonitride phase of the precipitation strengthening phase.

In other words, it is preferable that at least one of the Ti, Zr, Hf, V, Nb and Ta components is contained. The total content of the Ti, Zr, Hf, V, Nb and Ta components is preferably 0.5 to 4 mass %, more preferably 0.6 to 3 mass %, and even more preferably 0.7 to 2 mass %. When the total content is less than 0.5 mass %, the precipitation amount of the precipitation strengthening phases such as the MC type carbide phase, the M(C,N) type carbonitride phase and/or the MN type nitride phase is insufficient, and as a result, the effect of improving the mechanical properties is insufficient. In contrast, when the total content is over 4 mass %, the mechanical properties deteriorate due to coarsening of the particles of the precipitation strengthening phase, accelerated generation of a brittle phase (e.g. σ phase), generation of particles of an oxide phase that does not contribute to precipitation strengthening, etc.

Furthermore, in the viewpoints of dispersed precipitation of particles of the precipitation strengthening phase (suppression of coarsening of the precipitation strengthening phase particles), it is more preferable that three or more of the Ti, Zr, Hf, V, Nb and Ta elements are contained in the alloy, and even more preferably four or more.

More specifically, when the Ti component is included, the Ti content is preferably 0.01 to 1 mass % and more preferably 0.05 to 0.8 mass %.

When the Zr component is included, the Zr content is preferably 0.05 to 1.5 mass % and more preferably 0.1 to 1.2 mass %. From the viewpoint of the mechanical strength, it is preferable that the Zr component is essentially included. In contrast, from the viewpoint of the toughness, it is preferable that the Zr component is not included.

When the Hf component is included, the Hf content is preferably 0.01 to 0.5 mass % and more preferably 0.02 to 0.1 mass %.

When the V component is included, the V content is preferably 0.01 to 0.5 mass % and more preferably 0.02 to 0.1 mass %.

When the Nb component is included, the Nb content is preferably 0.02 to 1 mass % and more preferably 0.05 to 0.8 mass %.

When the Ta component is included, the Ta content is preferably 0.05 to 1.5 mass % and more preferably 0.1 to 1.2 mass %.

### Balance: Co component and Impurities

The Co component is one of the key components of the alloy and its content is the largest of all the components. As mentioned above, Co based alloy materials have the advantages of having corrosion resistance and abrasion resistance comparable to or superior to those of Ni based alloy materials.

The O component is one of the impurities of the alloy and is not to be intentionally included in the alloy. However, the O content of 0.04 mass % or less is acceptable as it does not have any serious negative influence on the mechanical properties of the Co based alloy product. When the O content is over 0.04 mass %, coarse grains of each oxide (e.g. Ti oxide, Zr oxide, Fe oxide, Al oxide, Si oxide, etc.) are generated, which causes deterioration of the mechanical properties.

The alloy powder preparation step S1 is a step of preparing a Co based alloy powder having a predetermined chemical composition. There is no particular limitation on a method and technique for preparing the Co based alloy powder, and any conventional method and technique may be used. For example, there may be performed a master ingot manufacturing substep S1a of manufacturing a master ingot by mixing, melting and casting the raw materials such that the ingot has a desired chemical composition and an atomization substep S1b of forming the alloy powder from the master ingot.

When intending to control the N content, it is preferable to perform the control in the atomization substep S1b. As an atomization method, any conventional method and technique may be basically used. For example, when controlling the N content, gas atomizing or centrifugal force atomizing with controlling the amount of nitrogen (nitrogen partial pressure) in the atomization atmosphere may be preferably used.

Furthermore, after the atomization substep S1b, a nitriding heat treatment substep S1c (not shown in FIG. 1) may be performed in which the alloy powder is subjected to a nitriding heat treatment (e.g., a heat treatment at 300°C or higher and 520°C or lower in an ammonia gas atmosphere), as needed. As the ammonia gas atmosphere, a mixed gas of ammonia (NH₃) gas and N₂ gas or a mixed gas of NH₃ gas and hydrogen (H₂) gas can be preferably used.

For ease of handling and ease of filling the alloy powder bed in the following selective laser melting step S2, the particle size of the alloy powder is preferably 5 to 100 µm, more preferably 10 to 70 µm, and even more preferably 10 to 50 µm. When the particle size of the alloy powder is less than 5 µm, fluidity of the alloy powder decreases in the following step S2 (i.e. formability of the alloy powder bed decreases), which causes deterioration of shape accuracy of the AM article. In contrast, when the particle size of the alloy powder is over 100 µm, controlling the local melting and rapid solidification of the alloy powder bed in the following step S2 becomes difficult, which leads to insufficient melting of the alloy powder and increased surface roughness of the AM article.

In view of the above, an alloy powder classification substep S1d is preferably performed so as to regulate the alloy powder particle size to 5 to 100 µm. In the invention, when the particle size distribution of the obtained alloy powder is observed to fall within the desired range, it is assumed that the substep S1d has been performed.

### (Selective Laser Melting Step)

The selective laser melting step S2 is a step of forming an AM article with a desired shape by selective laser melting (SLM) using the prepared Co based alloy powder. Specifically, this step comprises alternate repetition of an alloy powder bed preparation substep S2a and a laser melting solidification substep S2b. In the substep S2a, the Co based alloy powder is laid such that it forms an alloy powder bed having a predetermined thickness, and in the substep S2b, a predetermined region of the alloy powder bed is irradiated with a laser beam to locally melt and rapidly solidify the Co based alloy powder in the region.

In this step S2, in order to obtain a finished Co based alloy product having a desired microstructure, the local melting and rapid solidification of the alloy powder bed should be controlled. For example, the microstructure of the AM article such as the average size of the segregation cell can be changed by changing the additive manufacturing conditions such as the average size of molten pools. Then, the additive manufacturing conditions are controlled such that the average size of molten pools is changed during additive manufacturing one AM article.

More specifically, the thickness of the alloy powder bed h (unit: µm), the output power of the laser beam P (unit: W), and the scanning speed of the laser beam S (unit: mm/s) are preferably controlled to satisfy the following formulas: "15 < h < 150" and "67 × (P/S) - 3.5 < h < 2222 × (P/S) + 13". When these formulas are not satisfied, an AM article having a desired microstructure cannot be obtained.

While the output power P and the scanning speed S of the laser beam basically depend on configurations of the laser apparatus, they may be determined so as to satisfy the following formulas: "10 ≤ P ≤ 1000" and "10 ≤ S ≤ 7000".

The Co based alloy AM article obtained by the SLM step S2 is a polycrystalline body of matrix phase crystal grains. In the matrix phase crystal grains, segregation cells with an average size of 0.13 to 2 µm are formed. More in detail, in the viewpoint of the creep property, the average size of the segregation cells is preferably within 0.13 to 1.3 µm, more preferably within 0.14 to 1 µm, and even more preferably within 0.15 to 0.7 µm. In the invention, a region of the segregation cells where the creep property is prioritized is referred to as a first segregation cell region.

By contrast, in the viewpoint of the high temperature fatigue property, the average size of the segregation cells is preferably within 0.25 to 2 µm, more preferably within 0.5 to 1.9 µm, and even more preferably within 0.8 to 1.8 µm. In the invention, another region of the segregation cells where the high temperature fatigue property is prioritized is referred to as a second segregation cell region.

Strictly to say, a ratio of the segregation cell average size in the second segregation cell region to that in the first segregated cell region depends on whether the creep property or the high temperature fatigue property is prioritized. In order to make the advantages clear, the ratio is preferably 1.3 or more, and more preferably 1.5 or more.

Besides, it may be recognized that particles of the precipitation strengthening phases are precipitated on a part of boundary regions of the segregation cells. In addition, from various experiments by the inventors, it can be recognized that the matrix phase crystal grains with an average size of 5 to 150 µm are preferable.

A more detailed microstructure observation by scanning transmission electron microscopy-energy dispersive X-ray spectrometry (STEM-EDX) has revealed that the components constituting the precipitation strengthening phases (Ti, Zr, Hf, V, Nb, Ta, C and N) segregate in the boundary regions between the neighboring segregation cells (i.e. in outer peripheral regions of micro-cells, similar to cell walls). It has also been observed that particles precipitating on the boundary regions among these segregation cells are particles of the precipitation strengthening phases such as the MC type carbide phase, the M(C,N) type carbonitride phase and/or the MN type nitride phase in which the transition metal M consists of at least one of Ti, Zr, Hf, V, Nb and Ta.

Meanwhile, the segregation of the M components constituting the precipitation strengthening phases and the precipitation of particles of the precipitation strengthening phases can be observed also on the grain boundaries of the matrix phase crystal grains. The AM article manufactured by the selective laser melting step S2 is one aspect of a Co based alloy product according to the invention.

### (Strain Relaxation Annealing Step)

The strain relaxation annealing step S3 is an annealing step for the purpose of relaxing the residual internal strain of the AM article that may occur during the rapid solidification of the SLM step S2. This step S3 is not an essential step. However, in the case such that the AM article obtained by the SLM step S2 has a complicated shape or is a Co-based alloy product used in an environment with steep temperature changes, it is preferable to perform this step S3 in order to prevent undesired deformation in the initial stage of use.

The strain relaxation annealing is preferably performed at a temperature range of 600°C or more and less than 1100°C, more preferably 700°C to 1050°C, and even more preferably 800°C to 1000°C. There is no particular limitation on holding duration of the annealing, and it may be appropriately set in consideration of the volume/heat capacity of the AM article to be annealed and the annealing temperature. Furthermore, there is no particular limitation on a cooling method after the strain relaxation annealing, and water cooling, oil cooling, air cooling, or furnace cooling may be adopted.

By the strain relaxation annealing, it has been found that the components segregated in the boundary regions of the segregation cells diffuse, combine and form the precipitation strengthening phases on/along the boundary regions, and as a result, cell walls of the segregation cells almost disappear (more specifically, it becomes difficult to observe the cell walls of segregation cells by a microstructure observation). In other words, the particles of precipitation strengthening phases are formed dispersedly along regions where the cell walls seem to have existed (on the boundary regions of ex-segregation cells). In the invention, such a region surrounded with the particles of precipitation strengthening phases precipitating on/along the boundary regions of ex-segregation cells is referred to as a "post-segregation cell".

It can be considered that the post-segregation cell has almost the same outer form as the segregation cell, and thus an average size of post-segregation cells is in a range of 0.13 to 2 µm. More specifically, similar to the segregation cell, in the viewpoint of the creep property, the average size of the post-segregation cells is preferably within 0.13 to 1.3 µm, more preferably within 0.14 to 1 µm, and even more preferably within 0.15 to 0.7 µm. In the invention, a region of the post-segregation cells where the creep property is prioritized is referred to as a first post-segregation cell region.

In the viewpoint of the high temperature fatigue property, the average size of the post-segregation cells is preferably within 0.25 to 2 µm, more preferably within 0.5 to 1.9 µm, and even more preferably within 0.8 to 1.8 µm. In the invention, another region of the post-segregation cells where the high temperature fatigue property is prioritized is referred to as a second post-segregation cell region.

A ratio of the post-segregation cell average size in the second post-segregation cell region to that in the first post-segregated cell region, as in the case of the segregation cells, is preferably 1.3 or more, and more preferably 1.5 or more, in order to make the advantageous effects clear.

As a result of this step S3, the Co based alloy AM article thus obtained has an average size of the matrix phase crystal grains of 5 to 150 µm, and includes the post-segregation cells in each of the matrix phase crystal grains, in which the particles of precipitation strengthening phases precipitate dispersedly along the boundaries of the post-segregation cells. Furthermore, because the particles of precipitation strengthening phases can act a role as pinning points against grain boundary migration of the matrix phase crystal grains, coarsening of the matrix phase crystal grains is suppressed. The Co based alloy AM article obtained through this step S3 is one aspect of a Co based alloy product according to the invention.

Even in the case that the Co-based alloy product not subjected to this step S3 is used as a high-temperature member, if the temperature of the use environment is equivalent to the temperature condition of strain relaxation annealing, it can be considered that a state of the product will become the same as when the step S3 is performed, along with the use. In other words, this step S3 includes the thermal history experienced by the use of high temperature members. Then, such a high temperature member is also considered as one aspect of a Co-based alloy product according to the invention.

### (Finishing Step)

The finishing step S4 is a step, to the AM article obtained by the step S2 or obtained through the step S3, forming a thermal barrier coating (TBC) and/or finishing a surface. There are no particular limitations on the formation of TBC and the surface finishing, and conventional methods can be used as appropriate. Although this step S4 is not an essential step, it may be appropriately performed according to the application and usage environment of the Co based alloy product. Such a Co-based alloy AM article obtained through the step S4 is also considered as one aspect of a Co-based alloy product according to the invention.

Meanwhile, when the formation of TBC involves heat treatment and a temperature of the heat treatment matches the temperature condition of strain relaxation annealing, it corresponds to performing step S3 and step S4 at the same time.

### [Co Based Alloy Product]

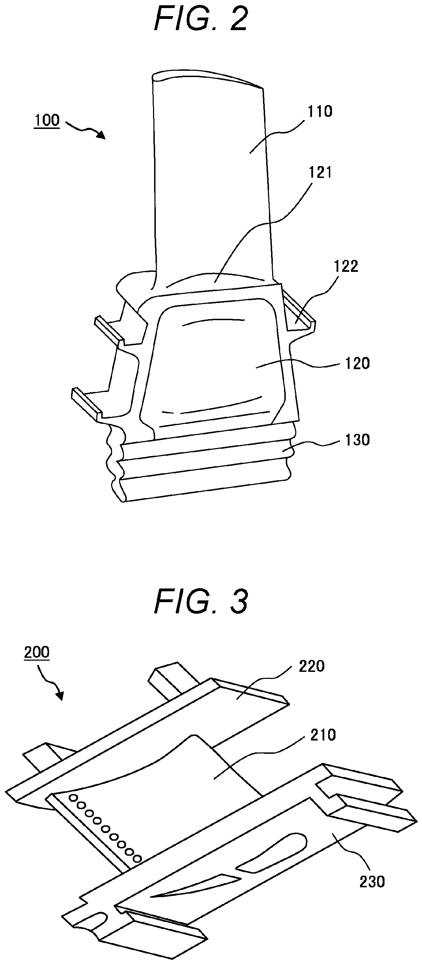

FIG. 2 is a schematic illustration of a perspective view showing an exemplary turbine rotor blade as a high temperature member according to an embodiment of the invention. As shown in FIG. 2, the turbine rotor blade 100 includes, roughly, an airfoil part 110, a shank 120, and a root part 130 (also referred as a dovetail). The shank 120 is provided with a platform 121 and radial fins 122. Inside the airfoil part 110 is often formed a cooling structure.

As described before, in the airfoil part 110 of the turbine rotor blade 100, the creep property becomes a more important mechanical characteristic because the high temperature fluid directly hits and the rotational centrifugal stress acts on it. In contrast, in the shank 120 and the root part 130, the high temperature fatigue property becomes a more important mechanical characteristic in order to withstand the repeated bending stress and torsional stress from the airfoil part 110. Based on these situations, the airfoil part 110 is preferably built up so as to become the first segregation cell region or the first post-segregation cell region, and the shank 120 and the root part 130 are preferably built up so as to become the second segregation cell region or the second post-segregation cell region.

Meanwhile, in the Co based alloy product of the invention, between the first segregation cell region having a relatively smaller average segregation cell size and the second segregation cell region having a relatively larger average segregation cell size, a third segregation cell region may further exist, in that an average segregation cell size of the third segregation cell region is intermediate between those of the first and the second segregation cell regions.

Similarly, between the first post-segregation cell region having a relatively smaller average post-segregation cell size and the second post-segregation cell region having a relatively larger average post-segregation cell size, a third post-segregation cell region may further exist, in that an average post-segregation cell size of the third post-segregation cell region is intermediate between those of the first and the second post-segregation cell regions. By providing the third segregation cell region or the third post-segregation cell region, there leads to a further advantage being possible to suppress occurrence of a boundary where the mechanical properties steeply change in one member.

For example, in the turbine rotor blade 100, a region 10% in length from a root of the airfoil part 110 (a region having a length of 10% when the radial length of the airfoil part 110 is 100%) may become the third segregation cell region or the third post-segregation cell region. In the region near the root of the airfoil part 110, the temperature is lower than and the rotational centrifugal force is smaller than a region near the tip, but the bending stress and torsional stress are larger than the region near the tip. Therefore, by arranging the third segregation cell region or the third post-segregation cell region having intermediate mechanical characteristics to the region, the mechanical characteristics of the turbine rotor blade 100 as a whole can be brought closer to the ideal.

FIG. 3 is a schematic illustration of a perspective view showing an exemplary turbine stator blade which is a Co based alloy product as another high temperature member according to an embodiment of the invention. As shown in FIG. 3, the turbine stator blade 200 includes an airfoil part 210, an inner ring side end wall 220, and an outer ring side end wall 230. Inside the airfoil part 210 is often formed a cooling structure.

In the airfoil part 210 of the turbine stator blade 200, the creep property becomes a more important mechanical characteristic because the high temperature fluid directly hit and the fluid pressure directly applies to the airfoil part 210. In contrast, in the inner ring side end wall 220 and the outer ring side end wall 230, the high temperature fatigue property becomes a more important mechanical characteristic in order to withstand the vibration of the gas turbine. Based on these situations, the airfoil part 210 is preferably built up so as to become the first segregation cell region or the first post-segregation cell region, and the end walls 220 and 230 are preferably built up so as to become the second segregation cell region or the second post-segregation cell region.

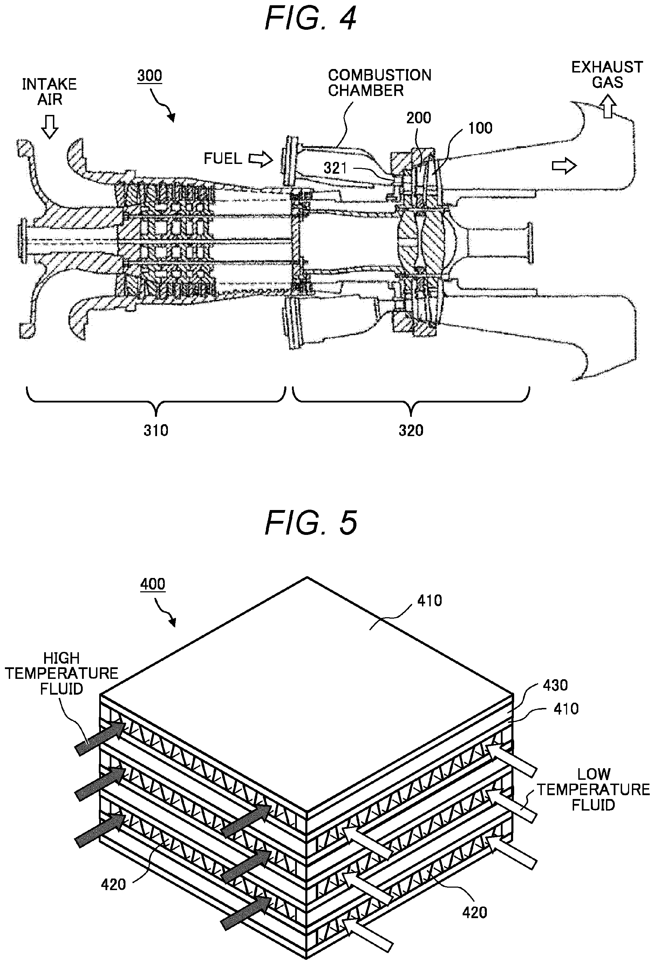

FIG. 4 is a schematic illustration of a cross-sectional view showing an exemplary gas turbine equipped with a Co based alloy product according to an embodiment of the invention. As shown in FIG. 4, the gas turbine 300 roughly includes a compression part 310 for compressing intake air and a turbine part 320 for blowing combustion gas of a fuel on turbine blades to obtain rotation power. The high temperature member of the invention can be preferably used as a turbine nozzle 321, the turbine stator blade 200 and/or the turbine rotor blade 100 inside the turbine part 320.

Here, in the turbine nozzle 321, an inner side portion to which the high temperature fluid directly hit is preferably built up so as to become the first segregation cell region or the first post-segregation cell region, and an outer side portion is preferably built up so as to become the second segregation cell region or the second post-segregation cell region.

The high temperature member according to the invention is not limited to gas turbine applications but may be used for other turbine applications (e.g. steam turbines) and component used under high temperature environment in other machines/apparatuses.

FIG. 5 is a schematic illustration of a perspective view showing an exemplary heat exchanger which is another Co based alloy product as a high temperature member according to an embodiment of the invention. A heat exchanger 400 shown in FIG. 5 is an example of a plate-fin type heat exchanger, and has a basic structure in which a separation layer 410 and a fin layer 420 are alternatively stacked each other. Both ends in the width direction of flow channels in the fin layer 420 are sealed by a side bar portion 430. Heat exchanging between high temperature fluid and low temperature fluid can be done by flowing the high temperature fluid and the low temperature fluid alternately into adjacent fin layers 420.

In the heat exchanger 400, the fin layers 420 and the side bar portions 430 to which the high temperature fluid directly hit are preferably built up so as to become the first segregation cell region or the first post-segregation cell region, and the other fin layers 420 and the other side bar portions 430 to which the low temperature fluid directly hit are preferably built up so as to become the second segregation cell region or the second post-segregation cell region.

The heat exchanger 400 of the invention is formed integrally without soldering joining or welding joining the conventional parts constituting a heat exchanger such as separation plates, corrugated fins and side bars. Consequently, the heat resistance can be improved and the weight can be reduced, compared with the conventional heat exchangers. In addition, the heat transfer efficiency can be higher by forming an appropriate concavo-convex pattern on the surfaces of the flow channels and making the fluid into turbulence. Improving the heat transfer efficiency leads to downsizing of the heat exchanger.

### EXAMPLES

The present invention will be hereinafter described in more detail with experimental examples. It should be noted that the invention is not limited to these examples.

### [Experiment 1]

### (Preparation of Inventive Alloy Powders AP-1 to AP-3)

Co based alloy powders having the chemical compositions shown in Table 1 were prepared (alloy powder preparation step S1). Specifically, first, the master ingot manufacturing substep S1a was performed, in which the raw materials were mixed and subjected to melting and casting by a vacuum high frequency induction melting method so as to form a master ingot (weight: approximately 2 kg) for each alloy material. Next, the atomization substep S1b was performed in which each master ingot was remelted and subjected to gas atomizing to form each alloy powder. In the substep S1b, the alloy powders AP-2 and AP-3 were prepared in an argon (Ar) gas atmosphere, and the alloy powder AP-1 was prepared in a nitrogen (N₂) gas atmosphere.

Then, each alloy powder thus obtained was subjected to the alloy powder classification substep S1d to control the particle size of alloy powder. Each alloy powder was classified into an alloy powder with a particle size of 5 to 25 µm.

**TABLE 1 Chemical Compositions of Co Based Alloy Powders AP-1 to AP-3.**

| Alloy Powder | Chemical Composition (mass %) | | | | | | | | | | | | | | | | | |
|---|---|---|---|---|---|---|---|---|---|---|---|---|---|---|---|---|---|---|
| | C | N | B | Cr | Ni | Fe | W | Ti | Zr | Hf | V | Nb | Ta | Al | Si | Mn | Co | O |
| AP-1 | 0.17 | 0.066 | 0.01 | 24.7 | 8.1 | - | 6.0 | 0.50 | 0.10 | 0.02 | 0.05 | 0.15 | 0.50 | 0.60 | 0.10 | 0.20 | **Bal.** | 0.020 |
| AP-2 | 0.17 | 0.015 | 0.01 | 24.9 | 10.5 | 0.01 | 7.6 | 0.28 | 0.45 | - | - | 0.12 | 0.40 | 1.0 | 0.10 | 0.01 | **Bal.** | 0.012 |
| AP-3 | 0.16 | 0.009 | 0.01 | 24.9 | 10.4 | 0.01 | 7.6 | 0.29 | 0.51 | - | - | 0.11 | 0.40 | 0.05 | 0.05 | 0.01 | **Bal.** | 0.015 |

| | | | | | | | | | | | | | | | | | | |
|---|---|---|---|---|---|---|---|---|---|---|---|---|---|---|---|---|---|---|
| "-" indicates that the element was not intentionally included. "Bal." indicates inclusion of impurities other than O. | | | | | | | | | | | | | | | | | | |

### [Experiment 2]

### (Examination of SLM Conditions in Selective Laser Melting Step)

AM articles (8 mm in diameter × 10 mm in length of additive manufacturing direction) were formed by the SLM process using AP-1 prepared in Experiment 1 (selective laser melting step S2). The basic examination of SLM conditions was carried out in the same manner as in Patent Literature 1. Here, a ratio of the output power P of the laser beam to the scanning speed S (mm/s) of the laser beam in the SLM conditions means the local heat input P/S (unit: W × s/mm = J/mm), and thus controlling the local heat input corresponds to controlling the molten pool size and the cooling rate of the molten pool.

The AM articles formed above were each subjected to microstructure observation to measure the average size of segregation cells. The microstructure observation was performed by scanning electron microscopy (SEM). Also, the obtained SEM images were subjected to image analysis using an image processing program (ImageJ, a public domain program developed at the National Institutes of Health (NIH) in U.S.A.) to measure the average size of segregation cells.

The AM articles having the average segregation cell size within a range of 0.13 to 2 µm were judged as "Passed", and the others were judged as "Failed". Based on the results of the measurement, it has been confirmed that in the selective laser melting step S2, the SLM process is preferably performed while controlling the thickness of the alloy powder bed h (unit: µm), the output power of the laser beam P (unit: W), and the scanning speed of the laser beam S (unit: mm/s) such that they satisfy the following formulas: "15 < h < 150" and "67 × (P/S) - 3.5 < h < 2222 × (P/S) + 13".

### [Experiment 3]

### (Manufacturing of Co Based Alloy Products AA-1 to AA-3 and AA-1' to AA-3')

Using each of AP-1 to AP-3 prepared in Experiment 1, a plurality of AM articles (10 mm in diameter × 60 mm in length of additive manufacturing direction) were formed by the SLM process (SLM step S2). During additive manufacturing, at the time that each AM article was built up with 30 mm of a length in the additive manufacturing direction, the SLM conditions were changed while satisfying the passing conditions examined in Experiment 2 so that the AM article was made with the first segregation cell region and the second segregation cell region in one half each. AM articles just after the step 2 made from AP-1 to AP-3 were named to alloy products AA-1 to AA-3, respectively.

In addition, the alloy products AA-1 to AA-3 separately prepared were subjected to the strain relaxation annealing held at 900°C for 1 hour (strain relaxation annealing step S3), thus manufacturing the alloy products AA-1' to AA-3'.

### [Experiment 4]

### (Microstructure Observation)

Test pieces for microstructure observation, mechanical properties testing, and oxidation testing were taken from AA-1 to AA-3 and subjected to microstructure observation, mechanical properties testing and oxidation testing. Also, other test pieces for microstructure observation were taken from AA-1' to AA-3' and subjected to microstructure observation.

The microstructure observation was performed by optical microscopy, SEM and image analysis (using ImageJ) of SEM images thereof in a similar manner to Experiment 2.

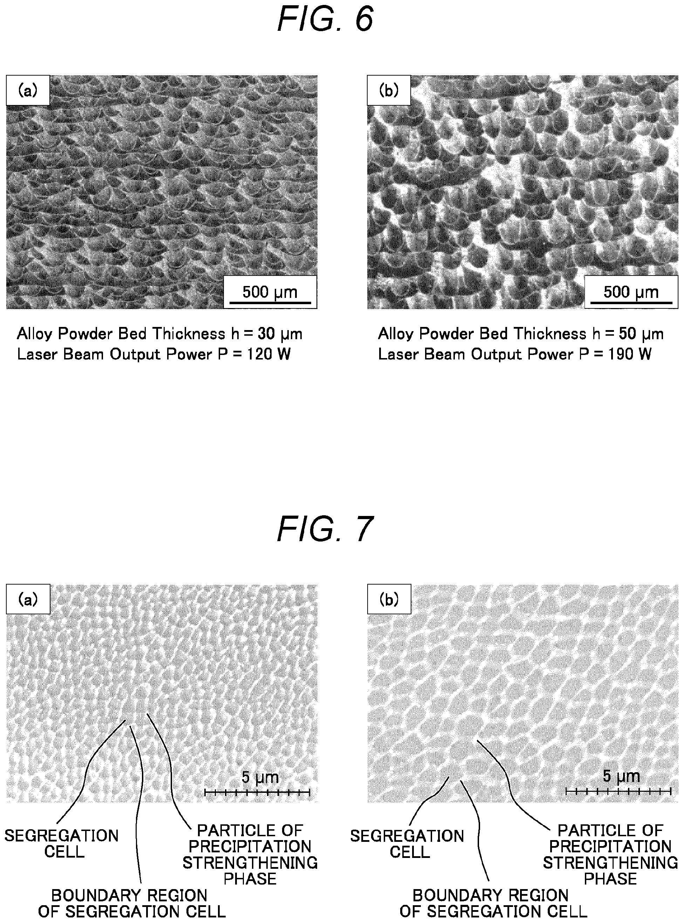

FIGs. 6(a) and 6(b) are optical microscopy images showing exemplary microstructures of cross sectional view parallel to the additive manufacturing direction in the alloy product AA-1 made from the alloy powder AP-1; (a) first segregation cell region additively manufactured under conditions of the alloy powder bed height h of 30 µm and the laser beam output power P of 120 W, and (b) second segregation cell region additively manufactured under conditions of the alloy powder bed height h of 50 µm and the laser beam output power P of 190 W.

As shown in FIGs. 6(a) and 6(b), it has been confirmed that sizes of the molten pools (exactly, trace sizes of the molten pools) are varied by changing the alloy powder bed height h and the laser beam output power P. Approximating a drop-like shape (a scale-like shape) of each molten pool by a circle and defining a size of the molten pool by a diameter of the circle, the size of each of 20 molten pools was measured in each FIGs. 6(a) and 6(b). As the results of calculating the average sizes of the molten pools (unit: µm), it has been revealed that the average size of the molten pools in FIG. 6(a) is 104 µm and that in FIG. 6(b) is 156 µm.

Meanwhile, although not shown, one molten pool does not form one matrix crystal grain, but one molten pool solidifies so as to form a plurality of matrix phase crystal grains. As a result, the obtained alloy product becomes a polycrystalline body of matrix phase crystal grains.

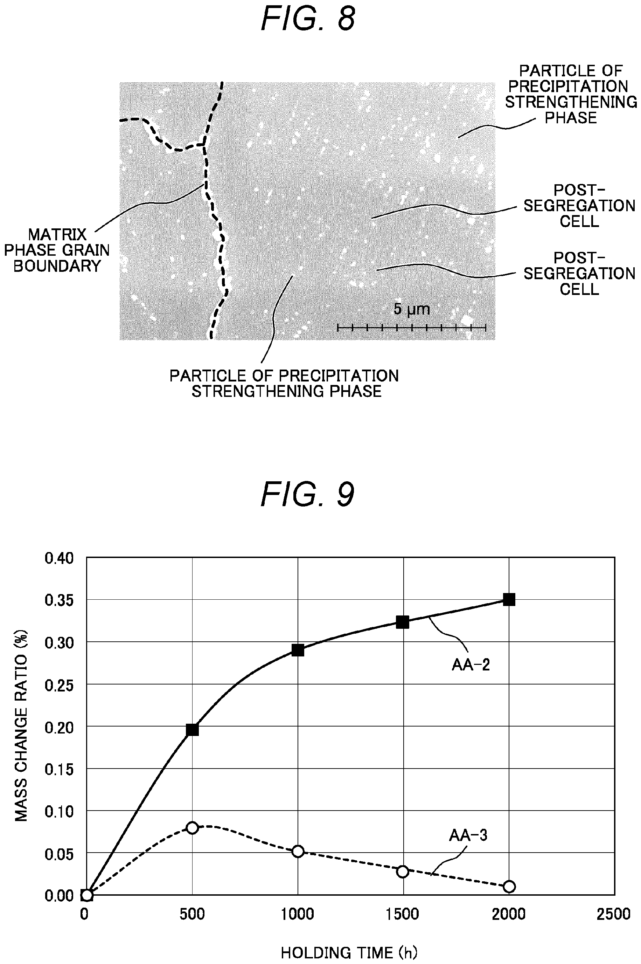

FIGs. 7(a) and 7(b) are exemplary SEM images of the alloy product AA-1 described respectively in FIGs. 6(a) and 6(b); (a) first segregation cell region additively manufactured under conditions of the alloy powder bed height h of 30 µm and the laser beam output power P of 120 W, and (b) second segregation cell region additively manufactured under conditions of the alloy powder bed height h of 50 µm and the laser beam output power P of 190 W.

As shown in FIGs. 7(a) and 7(b), it has been confirmed that in the alloy product obtained by the SLM step S2, the segregation cells are formed in the matrix crystal grains as in Patent Literature 1. As the results of measuring the average sizes of the segregation cells by using the image processing program (ImageJ) as in Experiment 2, it has been revealed that the average size of the segregation cells in FIG. 7(a) is 0.56 µm and that in FIG. 7(b) is 1.1 µm.

Furthermore, it was separately confirmed that in AA-2 made from AP-2 and AA-3 made from AP-3, microstructures with the same tendency as AA-1 were observed. From the results of these microstructure observations, it has been confirmed that when the SLM conditions are adjusted/controlled during the SLM step S2, the average size of the molten pools changes and then the average size of the segregation cells in the matrix phase crystal grains changes.

FIG. 8 is an SEM image showing an exemplary microstructure of the alloy product subjected to a strain relaxation annealing. FIG. 8 shows a microstructure of the first post-segregation cell region (former first segregation cell region) of AA-1' obtained by subjecting AA-1 to the strain relaxation annealing holding at 900°C for 1 hour.

As shown in FIG. 8, also the Co based alloy product through the strain relaxation annealing has a very unique microstructure. Specifically, it has been confirmed that boundary regions between the adjacent segregation cells almost disappear (more specifically, it becomes difficult to observe the cell walls of segregation cells by a microstructure observation), and the precipitation reinforcing phase particles form on/along boundary regions of the former segregation cells. Although not shown, the similar microstructure was observed in the second post-segregation cell region of AA-1' (the former second segregation cell region of AA-1).

Furthermore, it was separately confirmed that in AA-2' and AA-3' obtained through the strain relaxation annealing respectively to AA-2 and AA-3, microstructures with the same tendency as AA-1' were observed. From the results of these microstructure observations, it has been confirmed that the segregation cells are transformed into the post-segregation cells by performing the strain relaxation annealing.

### [Experiment 5]

### (Mechanical Properties Testing)

First, one alloy product was divided into two regions so as to separate the first and the second segregation cell regions. As a mechanical property test, a creep test and a high temperature fatigue test were performed on each region. As to the creep test, the creep rupture time (a time to rupture) was measured under the conditions of a temperature at 850°C and a stress of 156 MPa. As to the high temperature fatigue test, the cycle number to fracture (a number of cycles until fracture) was measured under the conditions of a temperature at 800°C and a strain amount of 1%.

In the above-described creep test, any creep rupture time of 750 hours or more was evaluated as "Passed" because such creep property can be deemed as comparable to that of the precipitation-strengthened Ni based alloy materials. Any creep rupture time of 1000 hours or more was evaluated as "Excellent", and any creep rupture time of less than 750 hours was evaluated as "Failed". In the above-described high temperature fatigue test, any cycle number to fracture of 750 cycles or more was evaluated as "Passed" because such high temperature fatigue property can be deemed as comparable to that of the precipitation-strengthened Ni based alloy materials. Any cycle number to fracture of 1000 cycles or more was evaluated as "Excellent", and any cycle number to fracture of less than 750 cycles was evaluated as "Failed". The results of the mechanical properties testing are shown in Table 2.

**Table 2 Results of Mechanical Properties Testing of Alloy Products AA-1.**

| Alloy Product | Alloy Powder | Average Size of Molten Pools (µm) | Average Size of Segregation Cells (µm) | Creep Test | | High Temperature Fatigue Test | |
|---|---|---|---|---|---|---|---|
| | | | | Creep Rupture Time (h) | Evaluation | Cycle Number to Fracture | Evaluation |
| AA-1 | AP-1 | 104 | 0.56 | 1108 | Excellent | 823 | Passed |
| | | 156 | 1.1 | 793 | Passed | 1643 | Excellent |

As shown in Table 2, in AA-1, the first segregation cell region where the average size of the segregated cells is relatively small is evaluated to have "excellent" creep property and "passed" high temperature fatigue property. By contrast, the second segregation cell region where the average size of the segregated cells is relatively large is evaluated to have "passed" creep property and "excellent" high temperature fatigue property. In the second segregation cell region, the creep property decreases by about 28% with respect to the first segregation cell region, but the high temperature fatigue property increases by about 100%.

It was separately confirmed that in AA-2 and AA-3, the mechanical properties with the same tendency as AA-1 were measured. From the results of the mechanical properties testing, it has been confirmed that the Co based alloy product of the invention can be adjusted in properties depending on the site in one member.

Meanwhile, it is generally considered that in metal materials the smaller the crystal grain size, the lower the creep strength and the higher the fatigue property. This is explained as follows. As the individual crystal grains become smaller, the slight slippage at each grain boundary is added up to result in a large slippage of the entire article, the effective strain amount that each crystal grain bears becomes smaller with respect to a predetermined strain amount for the entire article, and the absolute amount of grain boundaries increases, which suppresses the growth of cracks. These mechanisms are concerned compositely.

Although the boundary region of the segregated cell and the crystal grain boundary in the alloy product of the invention are not synonymous, it can be said that the result of the above mechanical properties is an extremely specific phenomenon that cannot be simply explained by the conventional common technical knowledge.

### [Experiment 6]

### (Oxidation Testing)

Because the oxidation resistance property is considered to be an important property in the first segregation cell region in which the creep property is prioritized, only the first segregation cell region from each of AA-1 to AA-3 was sampled and used as a test piece. As an oxidation test, the test pieces were raised to 950°C in the air atmosphere, and the mass change ratio of each of the test pieces was measured every 500 hours of holding.

The mass change ratio referred to here is defined as the mass of the test piece at the holding time divided by the initial mass. When the test piece is oxidized by the oxidation test, an increase in the mass change ratio due to the amount of oxide film formed should be observed.

FIG. 9 is a graph showing a relationship between the holding time and the mass change ratio in the oxidation test to the Co-based alloy products AA-2 and AA-3. As shown in FIG. 9, the mass change ratio of AA-2 increases monotonically with increasing the holding time (for example, the mass change ratio of 1000 hours holding is larger than that of 500 hours holding). In contrast, AA-3 shows a maximum mass change ratio around 500 hours, and then the mass change ratio decreases (the mass change ratio of 1000 hours holding becomes smaller than that of 500 hours holding). Meanwhile, although not shown, AA-1 showed similar results as AA-2.

The decrease after the mass change ratio reaches the maximum value in the oxidation test means that in the competition between formation of the oxide film and separation thereof there are more peeling/falling off than forming. This leads to oxidative thinning in high temperature members. From the viewpoint of oxidation resistance, it is desirable that there is little oxidative thinning.

It can be said that AA-1 and AA-2 which include a higher Al content and/or a higher N content than a Co based alloy article described in Patent Literature 1 have better oxidation resistance than AA-3 from the results of the oxidation test. Meanwhile, since the Co based alloy material is originally excellent in oxidation resistance, it can be said that even AA-3 has better oxidation resistance than the precipitation-strengthened Ni based alloy material.

Observing the cross section of the test piece after the oxidation test by using SEM, it has been confirmed that the test piece has similar microstructure as in FIG. 8. In other words, in the case that the alloy product not subjected to the strain relaxation annealing step S3 is used as it is as a high temperature member, when the temperature of operating environment is equivalent to the temperature condition of the strain relaxation annealing, it has been confirmed that the alloy product becomes the same state where the step S3 is conducted, accompanying usage thereof.

The above-described embodiments and experimental examples have been specifically given in order to help with understanding on the present invention, but the invention is not limited to the described embodiments and experimental examples. For example, a part of an embodiment may be replaced by known art, or added with known art. That is, a part of an embodiment of the invention may be combined with known art and modified based on known art, as far as no departing from a technical concept of the invention.

### LEGEND

- 100: turbine rotor blade;
- 110: airfoil part;
- 120: shank;
- 121: platform;
- 122: radial fin;
- 130: root part;
- 200: turbine stator blade;
- 210: airfoil part;
- 220: inner ring side end wall;
- 230: outer ring side end wall;
- 300: gas turbine;
- 310: compression part;
- 320: turbine part;
- 321: turbine nozzle;
- 400: heat exchanger;
- 410: separation layer;
- 420: fin layer; and
- 430: side bar portion.

## Claims

1. A product formed of a cobalt based alloy material, having a chemical composition comprising:
0.08 to 0.25 mass % of carbon;
0.003 to 0.2 mass % of nitrogen, the total amount of the carbon and the nitrogen being 0.083 to 0.28 mass %;
0.1 mass % or less of boron;
10 to 30 mass % of chromium;
5 mass % or less of iron, 30 mass % or less of nickel, the total amount of the iron and the nickel being 30 mass % or less;
tungsten and/or molybdenum, the total amount of the tungsten and the molybdenum being 5 to 12 mass %;
3 mass % or less of aluminum;
0.5 mass % or less of silicon;
0.5 mass % or less of manganese;
0.5 to 4 mass % of an M component being a transition metal other than tungsten and molybdenum and having an atomic radius of more than 130 pm; and
the balance being cobalt and impurities, the impurities including 0.04 mass % or less of oxygen,
wherein: the product is a polycrystalline body of matrix phase crystal grains; segregation cells are formed in the matrix phase crystal grains in that the M component is segregated in boundary regions of the segregation cells; there are at least two kinds of regions of the segregation cells having different average sizes from each other; a first segregation cell region has an average size of 0.13 to 1.3 µm; a second segregation cell region has an average size of 0.25 to 2 µm; and the average size of the second segregation cell region is 1.3 times or more larger than that of the first segregation cell region, or
wherein: the product is a polycrystalline body of matrix phase crystal grains; post-segregation cells are formed in the matrix phase crystal grains in that particles of MC type carbide phase, M(C,N) type carbonitride phase and/or MN type nitride phase including the M component are dispersedly precipitated along boundary regions of the post-segregation cells; there are at least two kinds of regions of the post-segregation cells having different average sizes from each other; a first post-segregation cell region has an average size of 0.13 to 1.3 µm; a second post-segregation cell region has an average size of 0.25 to 2 µm; and the average size of the second post-segregation cell region is 1.3 times or more larger than that of the first post-segregation cell region.

2. The product according to claim 1, wherein
the M component of the chemical composition is at least one of titanium, zirconium, hafnium, vanadium, niobium and tantalum.

3. The product according to claim 2, wherein:
in the case that the chemical composition includes the titanium as the M component, content of the titanium is 0.01 to 1 mass %;
in the case that the chemical composition includes the zirconium as the M component, content of the zirconium is 0.05 to 1.5 mass %;
in the case that the chemical composition includes the hafnium as the M component, content of the hafnium is 0.01 to 0.5 mass %;
in the case that the chemical composition includes the vanadium as the M component, content of the vanadium is 0.01 to 0.5 mass %;
in the case that the chemical composition includes the niobium as the M component, content of the niobium is 0.02 to 1 mass %; and
in the case that the chemical composition includes the tantalum as the M component, content of the tantalum is 0.05 to 1.5 mass %.

4. The product according to claim 2 or 3, wherein
the zirconium is an essential component as the M component of the chemical composition.

5. The product according to claim 2 or 3, wherein
the M component of the chemical composition is three or more of the titanium, the zirconium, the hafnium, the vanadium, the niobium and the tantalum.

6. The product according to any one of claims 1 to 5, wherein
the product comprises two regions, one region exhibits a creep rupture time of 1000 hours or more by a creep test under conditions of a temperature of 850°C and a stress of 156 MPa, and the other region exhibits a rupture cycle number of 1000 cycles or more by a high temperature fatigue test under conditions of a temperature 800°C and a strain of 1%.

7. The product according to any one of claims 1 to 6, wherein
between the first and the second segregation cell regions, there further exists a third segregation cell region having an average size between the average size of the first segregation cell region and that of the second segregation cell region, or
between the first and the second post-segregation cell regions, there further exists a third post-segregation cell region having an average size between the average size of the first post-segregation cell region and that of the second post-segregation cell region.

8. The product according to any one of claims 1 to 7, wherein
the product is a high temperature member.

9. The product according to claim 8, wherein
the high temperature member is a turbine stator blade, a turbine rotor blade, a turbine combustor nozzle, or a heat exchanger.

10. A method for manufacturing the cobalt based alloy product according to any one of claims 1 to 9, the method comprising:
an alloy powder preparation step of preparing a cobalt based alloy powder having the chemical composition; and
a selective laser melting step of forming an additively manufactured article, the step comprising alternate repetition of an alloy powder bed preparation substep of laying the cobalt based alloy powder such that it forms an alloy powder bed having a predetermined thickness and a laser melting solidification substep of irradiating a predetermined region of the alloy powder bed with a laser beam to locally melt and rapidly solidify the cobalt based alloy powder in the region, the laser beam having an output power and a scanning speed,
wherein in the selective laser melting step, the predetermined thickness of the alloy powder bed h (unit: µm), the output power of the laser beam P (unit: W), and the scanning speed of the laser beam S (unit: mm/s) are controlled to satisfy the following formulas: "15 < h < 150" and "67 × (P/S) - 3.5 < h < 2222 × (P/S) + 13", and to satisfy the following relationship in that an average size of molten pools in additive manufacturing the second segregation cell region is larger than that in additive manufacturing the first segregation cell region.

11. The method according to claim 10, wherein
after the selective laser melting step, the method further comprises a strain relaxation annealing step of subjecting the additively manufactured article to an annealing at temperatures in a range of 600°C or more and less than 1100°C.
